# EUROPÄISCHE PATENTSCHRIFT

(11) **EP 0 764 516 B1**
(45) Veröffentlichungstag und Bekanntmachung des Hinweises auf die Patenterteilung: **07.03.2001**
(21) Anmeldenummer: 96114537.2
(22) Anmeldetag: 11.09.1996
(51) Int. Cl.: B29C 49/38, B29D 23/18, B29C 33/36

(54) **Vorrichtung zur Herstellung von Rohren aus thermoplastischem Kunststoff mit Querprofilierung**
Apparatus for producing transversely grooved thermoplastic tubes
Dispositif pour la fabrication de tuyaux transversalement ondulés en matière thermoplastique

(30) Priorität: 22.09.1995 DE 19535231
(43) Veröffentlichungstag der Anmeldung: 26.03.1997
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred, Dr. Dipl.-Ing.

(56) Entgegenhaltungen:
- EP-A- 0 007 556
- WO-A-94/07673
- DE-C- 4 318 514
- DE-U- 9 311 140

## Beschreibung

Die Erfindung betrifft eine Vorrichtung nach dem Oberbegriff des Anspruches 1.

Aus der WO 94/07673 ist eine Vorrichtung der gattungsgemäßen Art bekannt, die einen Rahmen mit oberen Schienen aufweist Weiterhin ist der Rahmen mit Bodenschienen versehen. Auf den Bodenschienen ist ein unterer Formwagen angebracht, der einen ersten Satz Formabschnitts-Hälften trägt. Auf den oberen Schienen ist ein oberer Formwagen angeordnet, der einen zweiten Satz von Formabschnitts-Hälften trägt. Der erste Satz von Formabschnitts-Hälften auf dem unteren Wagen angeordnet, während der andere Satz von Formabschnitts-Hälften an der Unterseite des oberen Wagens angehängt ist. Die Formabschnitts-Hälften sind mit dem entsprechenden Wagen ohne Unterbrechung, d.h. stetig, verbunden. Beide Wagen sind mittels Kugelspindeln antreibbar, die dazu dienen, die Formabschnitts-Hälften auf einer Formstrecke in Produktionsrichtung zu schieben. Sie dienen weiterhin zur Rückführung der Formabschnitts-Hälften. Diese bekannte Vorrichtung weist den Nachteil auf, daß zur Formung des Rohres weniger als 50% der Formabschnitts-Hälften zur Verfügung stehen. Da die Wagen der bekannten Vorrichtung nicht nur dazu dienen, die Formabschnitts-Hälften zurückzutransportieren, sondern auch dazu dienen, die Formstrecke zu bilden, ist es außerordentlich schwierig, auf der Formstrekke eine wirklich geschlossene Form zu erhalten, die durch exakt miteinander fluchtende Formabschnitts-Hälften gebildet ist, und die nicht durch die großen Kräfte geöffnet werden kann, die von der Innenseite der Form auf die Formabschnitts-Hälften ausgeübt werden.

Aus der EP 0 007 556 B1 ist weiterhin eine Vorrichtung bekannt, bei der ebenfalls nur eine sehr geringe Gesamtanzahl von im Kreislauf geführten Formabschnitts-Hälften erforderlich ist.
Die Formabschnitts-Hälften werden auf der Rücklaufstrecke voneinander getrennt und mit einer solchen mittleren Geschwindigkeit zurückgeführt, daß die Rückführzeit für jede Formabschnitts-Hälfte kleiner ist als der Zeitabschnitt, den eine Formabschnitts-Hälfte auf der Formstrecke zur Weiterbewegung um eine ihrer Länge entsprechende Strecke benötigt. Hierdurch werden im Vergleich zu den üblichen Vorrichtungen mit ständig umlaufenden Formabschnitts-Hälften mehr als 50 % der Formabschnitts-Hälften eingespart. Auf jeder Rücklaufstrecke befindet sich jeweils nur eine Formabschnitts-Hälfte, die in einer kontinuierlichen, beschleunigten und wieder abgebremsten Bewegung zum stromaufwärts liegenden Ende der Vorgangsstrecke zurückgeführt wird. Infolge der geringen Anzahl der benötigten Formabschnitts-Hälften kann die Vorrichtung rasch und ohne großen Aufwand auf einen anderen Rohrdurchmesser umgerüstet werden, was insbesondere bei der Herstellung von Rohren mit sehr großen Durchmessern besonders wichtig ist, da derartige Rohre im allgemeinen nur in verhältnismäßig geringer Menge hergestellt werden, so daß es nicht zweckmäßig ist, für den Rohrdurchmesser eine vollständige Vorrichtung bereitzustellen. Eine derartige Vorrichtung erbringt auch Ersparnisse bei der Herstellung von Sonderformen für Rohre sowie bei der Herstellung von Übergangsstücken, Muffen u.s.w., da auch für diese Sonderformen nur eine sehr begrenzte Anzahl der teuren Formabschnitts-Hälften bereitgehalten werden muß.

Aus der DE 43 18 514 C1 ist ebenfalls eine Vorrichtung bekannt, bei der die Transportvorrichtung aus beiderseits der Formstrecke angeordneten parallel zur Produktionsrichtung verschiebbaren Schlitten gebildet sind, auf denen mittels Antrieben quer zur Produktionsrichtung verschiebbare Greifarme gelagert sind. Die Schlitten sind auf parallel zur Formstrecke verlaufenden Führungen verfahrbar. Die Greifarme sind in Führungen des Schlittens ausschließlich quer zu dessen Bewegungsbahnen verschiebbar. Hierdurch soll ein einfacher und stabiler Aufbau der Greifarme und eine einfache Steuerung derselben erreichbar sein. Die seitliche Anordnung der Schlitten und das verhältnismäßig weite Auskragen der Greifarme aus diesen, wenn sich die mit ihnen gekoppelten Formabschnitts-Hälften im Bereich der Formstrecke befinden, führt zu relativ ausgeprägten Momenten bzw. Kräften, die an den Schlitten angreifen.

Aus der EP 0 048 113 A1 (entspr. US 4 325 685) ist eine Vorrichtung zur Herstellung von Rohren aus thermoplastischem Kunststoff mit Querprofilierung bekannt, bei der einzelne Formabschnitts-Hälften endlos auf zwei geschlossenen Bahnen umlaufen, wobei sich jeweils zwei Formabschnitts-Hälften auf einer Formstrecke zu einem Formabschnitt zusammenfügen, wobei wiederum Formabschnitte dicht an dicht aneinanderliegen und eine Form bilden, in der ein aus einem Spritzkopf eines Extruders austretender noch warmplastischer Schlauch zu einem profilierten Rohr geformt wird. Die einzelnen Formabschnitts-Hälften weisen mehrere unterschiedliche Profile auf, von denen jeweils eines in Funktion bringbar ist. Hierzu sind die Formabschnitts-Hälften auf Trägern quer zu ihrer Bewegungsrichtung verschiebbar angeordnet und werden durch ein Weichensystem in ihre Arbeitsstellung gebracht. Hierdurch können auch Formabschnitts-Hälften in Eingriff gebracht werden, die eine Muffe und/oder ein Spitzende eines Rohres ausformen.

Aus DE-G 93 11 140 U1 ist eine Vorrichtung zum Herstellen von Wellrohren aus thermoplastischem Kunststoff bekannt, bei der Formabschnitts-Hälften paarweise aneinanderliegend in einer Formstrecke mittels eines Antriebsritzels gefördert werden, das in ein Zahnprofil an der Unterseite der Formabschnitts-Hälften eingreift. Der Rücktransport erfolgt ebenfalls mittels Ritzeln, die querbeweglich antreibbar sind, wodurch die Formabschnitts-Hälften aus der Formstrecke in eine Rücklaufstrecke und aus der Rücklaufstrecke wieder in die Formstrecke bringbar sind. Die Rücklaufstrecken sind anschließend an die Querförderritzel mit Parkstationen für Formabschnitts-Hälften versehen, die durch eigene Antriebe in die Rücklaufstrecken einführbar sind. Wenn ein Paar zusätzlicher Formabschnitts-Hälften, beispielsweise zur Formung von Muffen und/oder Spitzenden an dem zu erzeugenden Rohr, in die Formstrecke gebracht werden sollen, dann werden die entsprechenden zusätzlichen Formabschnitts-Hälften in die Rücklaufstrecke eingeführt und zum stromaufwärtsliegenden Ende der Formstrecke gebracht und dort in die Formstrecke eingeführt. Gleichzeitig wird am stromabwärtigen Ende der Formstrecke ein Paar von Formabschnitts-Hälften nach der Querförderung aus der Formstrecke heraus und vor dem Eintritt in die Rücklaufstrecke in die Parkposition verbracht. Wenn die zusätzlichen Formabschnitts-Hälften wieder aus dem Umlauf herausgenommen werden sollen, dann wird unmittelbar vor der Querförderung dieser zusätzlichen Formabschnitts-Hälften aus der Formstrecke heraus die geparkte Formabschnitts-Hälfte in die jeweilige Rücklaufstrecke eingeführt, so daß die zusätzliche Formabschnitts-Hälfte wieder geparkt werden kann. Die Formstrecke bleibt hierdurch immer gleich lang; es können nur zusätzliche Formabschnitts-Hälften eingeführt werden, die exakt die Länge der üblichen Formabschnitts-Hälften zur Herstellung des gewellten Rohres aufweisen.

Der Erfindung liegt die Aufgabe zugrunde, eine Vorrichtung der gattungsgemäßen Art zu schaffen, die in ihrem Aufbau noch weiter vereinfacht und stabiler ist.

Diese Aufgabe wird erfindungsgemäß durch die Merkmale im Kennzeichnungsteil des Anspruches 1 gelöst. Durch die Ausgestaltung der Transportvorrichtung nach Art eines Brückenkrans mit den erfindungsgemäß zugeordneten Transport-Wagen und Transportarmen wird das gesamte System weitgehend drehmomentenfrei, d.h. es treten keine Verkantungskräfte auf, die durch entsprechende konstruktive Maßnahmen aufgefangen werden müßten. Ein Umrüsten auf die Herstellung von Rohren anderer Querprofilierungen bzw. anderen Durchmessers ist in sehr einfacher Weise möglich.

Ein ganz besonderer hervorzuhebender Vorteil der erfindungsgemäßen Ausgestaltung liegt in der Weiterbildung nach Anspruch 2, durch die erreicht wird, daß die Formabschnitts-Hälften grundsätzlich nur dann auf der Grundplatte aufstehen und auf dieser bewegt werden, wenn sie sich in der Formstrecke befinden. Der gesamte Rücktransport der Formabschnitts-Hälften erfolgt in von der Grundplatte abgehobenem Zustand. Dadurch wird die Möglichkeit zu höheren Transportgeschwindigkeiten geschaffen und außerdem der Verschleiß drastisch reduziert. Außerdem wird der Energieeinsatz für den Betrieb der Transportvorrichtung, die im wesentlichen der Rückführung der Formabschnitts-Hälften dient, reduziert.

Weitere vorteilhafte Ausgestaltungen ergeben sich aus den Unteransprüchen 3 und 4 folgende.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Vorrichtung zur Herstellung von Rohren in Draufsicht,
- Fig. 2: eine Stirnansicht der Vorrichtung gemäß dem Sichtpfeil II in Fig. 1,
- Fig. 3: eine Vorrichtung zur Herstellung von Rohren mit Muffen in Draufsicht und
- Fig. 4: eine Stirnansicht der Vorrichtung gemäß dem Sichtpfeil IV in Fig. 3.

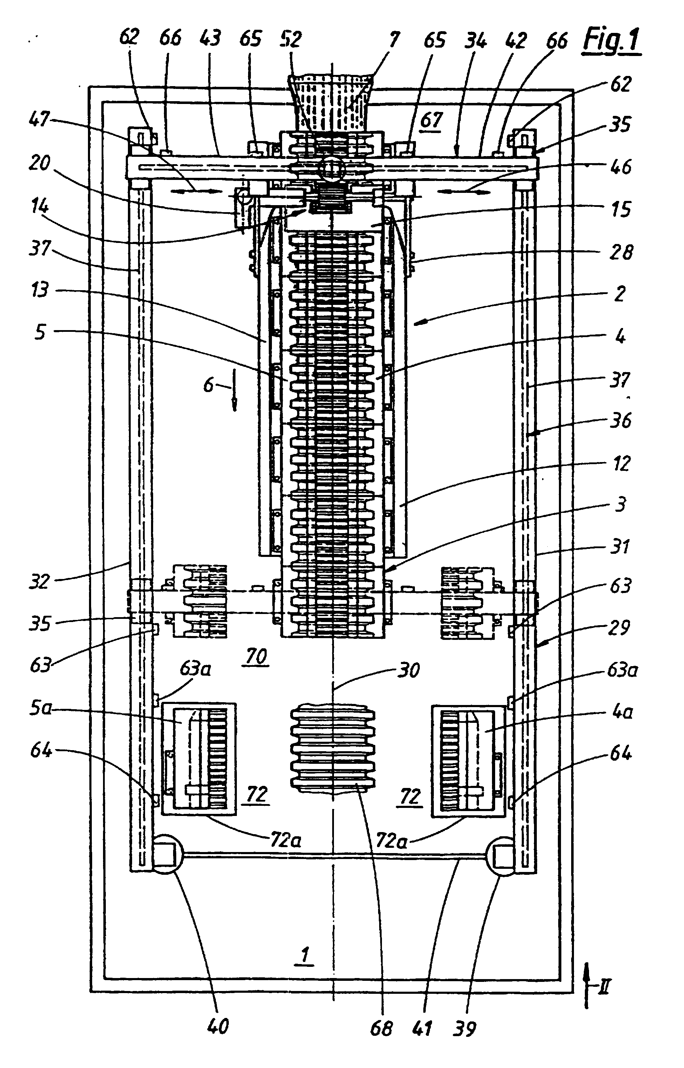

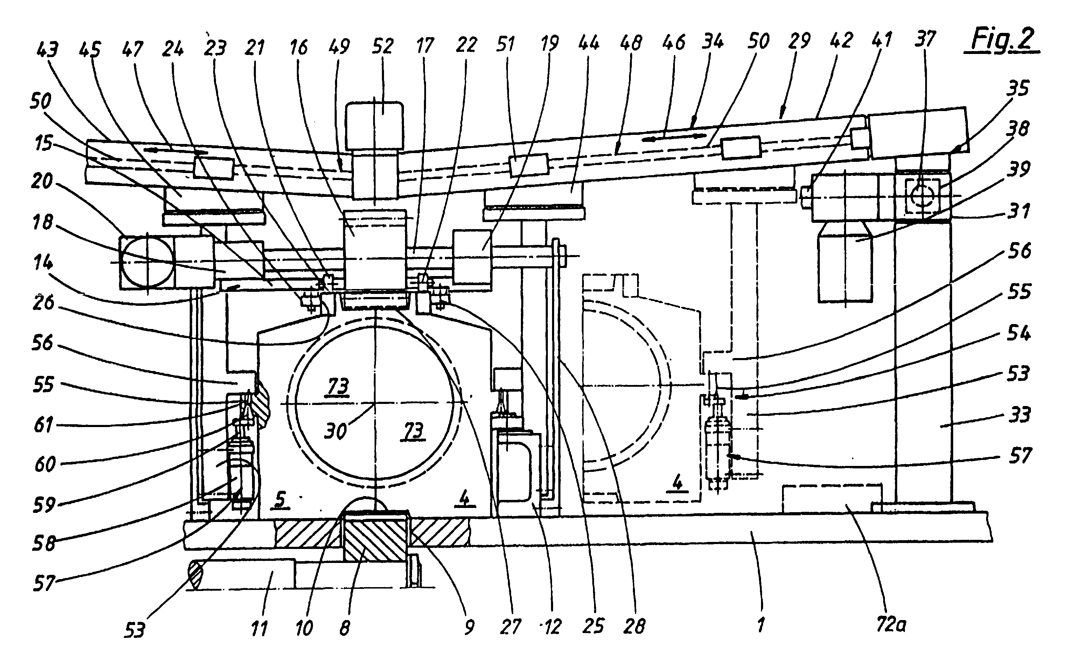

Die Fig. 1 und 2 zeigen eine Vorrichtung zur Herstellung von Rohren aus thermoplastischem Kunststoff mit Querprofilierung. Diese Vorrichtung weist eine Grundplatte 1 auf, auf der sich eine Formstrecke 2 befindet. Auf dieser Formstrecke 2 werden Formabschnitte 3 aneinandergereiht, die jeweils aus zwei Formabschnitts-Hälften 4, 5 bestehen. Solange die Formabschnitts-Hälften 4, 5 jeweils paarweise unter Bildung eines Formabschnitts 3 aneinanderliegen und solange benachbarte Formabschnitte 3 unter Bildung einer Form aneinanderliegen, bewegen sie sich geradlinig entsprechend einer Produktionsrichtung 6 auf der Grundplatte 1. Zum kontinuierlichen Antrieb der durch die Formabschnitte 3 gebildeten Form ist unmittelbar hinter einem Spritzkopf 7 eines Extruders ein unteres Antriebsritzel 8 vorgesehen, das durch eine Ausnehmung 9 in der Grundplatte 1 hindurchragt und in ein an der jeweiligen Unterseite der Formabschnitts-Hälften 4, 5 ausgebildetes Zahnprofil 10 eingreift. Das untere Antriebsritzel 8 ist drehfest auf einer Antriebswelle 11 angebracht, die unterhalb der Grundplatte 1 gelagert ist und von einem nicht dargestellten Getriebe-Motor angetrieben wird. Die Formabschnitts-Hälften 4, 5 werden auf der Formstrecke 2 jeweils durch Führungsleisten 12, 13 geführt bzw. zusammengehalten, die in dem der Grundplatte 1 benachbarten Bereich der Formabschnitts-Hälften 4, 5 an diesen angreifen.

Oberhalb der Grundplatte und oberhalb der Form ist eine Gegenlagerung 14 vorgesehen. Diese weist eine Basisplatte 15 auf, auf der ein oberes Antriebsritzel 16 gelagert ist Dieses obere Antriebsritzel 16 ist ebenfalls drehfest an einer Antriebswelle 17 angebracht, die beidseitig in Lagern 18, 19 gelagert ist, die auf der Basisplatte 15 befestigt sind. Die Antriebswelle 17 wird von einem Getriebe-Motor 20 angetrieben, der an dem benachbarten Lager 18 angebracht ist. An der Unterseite der Basisplatte 15 sind Abstützrollen 21 mit horizontaler Drehachse 22 gelagert, die sich auf an der Oberseite jeder Formabschnitts-Hälfte 4, 5 ausgebildeten Abstützflächen 23 abstützen, wodurch die Lage der Gegenlagerung 14 zu den Formabschnitts-Hälften 4 definiert wird. An der Unterseite der Basisplatte 15 sind weiterhin Führungsrollen 24 mit vertikaler Drehachse 25 gelagert, die seitlich an Führungsflächen 26 angreifen, die ebenfalls an der Oberseite der Formabschnitts-Hälften 4, 5 ausgebildet sind. Mittels dieser Führungsrollen 24 werden zwei einen Formabschnitt 3 bildende Formabschnitts-Hälften 4, 5 in ihrem oberen Bereich geführt bzw. zusammengehalten. Das obere Antriebsritzel 16 greift zwischen den Abstützflächen 23 bzw. den Führungsflächen 26 in ein Zahnprofil 27 ein, das an den Oberseiten der Formabschnitts-Hälften 4, 5 ausgebildet ist. Über das obere Antriebsritzel 16 wird nur 1/3 bis 1/4 des Betrages der Vorschubkraft auf die Formabschnitte 3 übertragen, der durch das untere Antriebsritzel 8 auf die Formabschnitte 3 ausgeübt wird. Die Gegenlagerung 14 ist in auf der Grundplatte 1 angebrachten, vertikal von dieser hochstehenden Drehmoment-Stützen 28 abgestützt, die das vom Getriebe- Motor 20 auf die Gegenlagerung 14 ausgeübte Drehmoment auffangen. Die Gegenlagerung 14 selber liegt im wesentlichen durch ihr Eigengewicht auf den Abstützflächen 23 auf. Dieses Eigengewicht reicht auch aus, die am Eingriff des oberen Antriebsritzels 16 in das Zahnprofil 27 auftretenden, vertikal nach oben auf die Gegenlagerung 14 wirkenden Kräfte zu kompensieren.

Oberhalb der Grundplatte 1 ist eine Transportvorrichtung 29 für die Formabschnitts-Hälften 4, 5 vorgesehen. Diese Transportvorrichtung 29 ist nach Art eines Brückenkranes aufgebaut. Sie weist zwei parallel zur Transportrichtung 6, zur Mittel-Längs-Achse 30 der Formabschnitte 3 und zur Grundplatte 1 und parallel zueinander verlaufende Führungsschienen 31, 32 auf. Diese sind oberhalb der Gegenlagerung 14 angeordnet und über Stützen 33 gegenüber der Grundplatte 1 abgestützt. Auf den Führungsschienen 31, 32 ist eine Transport-Brücke 34 über Lauf-Wagen 35 abgestützt Die Verschiebung der Transport-Brücke 34 auf den Führungsschienen 31, 32 erfolgt mittels Linearantrieben 36, die in der konkreten Ausgestaltung als Spindelantriebe ausgebildet sind. Diese Linearantriebe 36 weisen demzufolge auf den Führungsschienen 31, 32 angeordnete Gewindespindeln 37 auf, auf denen Gewindemuttem 38 angeordnet sind, die wiederum an den Lauf-Wagen 35 befestigt sind. Die Gewindespindeln 37 werden jeweils über einen Getriebe-Motor 39, 40 angetrieben, wobei diese beiden Getriebe-Motoren 39, 40 über eine horizontale und quer zu den Führungsschienen 31, 32 verlaufende Kuppel-Welle 41 zwangs-synchronisiert sind. Die beiden Gewindespindeln 37 werden also exakt drehzahlgleich angetrieben, so daß die Transport-Brücke 34 verkantungsfrei auf den Führungsschienen 31, 32 verfahren wird. Die Transport-Brücke 34 weist zwei Brücken-Abschnitte 42, 43 auf, die jeweils von den Führungsschienen 31, 32 aus gesehen aufeinanderzu zur Grundplatte 1 hin geneigt verlaufen. Der Abstand der Brücke 34 von der Grundplatte 1 ist also in ihrer Mitte, senkrecht oberhalb der Mittel- Längs-Achse 30 am geringsten. Auf den beiden Brücken-Abschnitten 42, 43 ist jeweils ein Transport-Wagen 44, 45 verfahrbar angeordnet, der in der jeweiligen Verfahrrichtung 46 bzw. 47 mittels eines Linearantriebs 48 bzw. 49 verschiebbar ist. Diese Linearantriebe 48, 49 bestehen im wesentlichen aus jeweils einer im jeweiligen Brücken-Abschnitt 42 bzw. 43 gelagerten Gewindespindel 50, die in eine Gewindemutter 51 am jeweiligen Transport- Wagen 44 bzw. 45 eingreift. Die beiden Gewindespindeln 50 werden von einem gemeinsamen Getriebe-Motor 52 angetrieben. Die Getriebe-Motoren 39, 40 und der Getriebe-Motor 52 sind umsteuerbare Motoren, also für Vorwärts- und Rückwärtslauf geeignet.

An den Transport-Wagen 44 und 45 ist jeweils ein Transportarm 53 angebracht, der sich senkrecht nach unten erstreckt. An jedem Transportarm 53 ist eine Haltevorrichtung 54 für eine Formabschnitts-Hälfte 4 bzw. 5 angebracht Ihr zugeordnet ist an jeder Formabschnitts-Hälfte 4 bzw. 5 ein Halte-Widerlager 55 ausgebildet. Jede Haltevorrichtung 54 weist eine obere Anlage 56 auf, gegen die von unten ein Halte-Widerlager 55 angedrückt wird. Zur Haltevorrichtung 54 gehört weiterhin eine Spannvorrichtung 57, die im wesentlichen aus einem pneumatischen oder hydraulischen Kolben-Zylinder-Antrieb 58 besteht. An der Kolbenstange 59 dieses Antriebs 58 ist ein Verriegelungszapfen 60 ausgebildet, der bei entsprechender Betätigung des Antriebs 58 in eine Verriegelungsausnehmung 61 an der Unterseite des Halte-Widerlagers 55 eingreift und gleichzeitig das Widerlager 55 gegen die Anlage 56 drückt. In der in Fig. 2 links dargestellten Position ist die Haltevorrichtung 54 fest mit dem Halte-Widerlager 55 der benachbarten Formabschnitts-Hälfte 4 bzw. 5 verriegelt; letztere ist also fest mit dem Transportarm 53 verbunden.

An den Führungsschienen 31, 32 sind Näherungsschalter 62, 63, 63a, 64 angeordnet, die bei Annäherung der Transport-Brücke 34 deren Position repräsentierende Signale an eine zentrale Steuerung abgeben, die nicht dargestellt ist. An der Transport-Brücke 34 sind ebenfalls Näherungsschalter 65, 66 angebracht, die eine innere bzw. eine äußere Position des jeweiligen Transport-Wagens 44, 45 repräsentierendes Signale an die zentrale Steuereinheit abgeben.

Die Wirkungsweise ist wie folgt:

Aus dem Spritzkopf 7 des Extruders werden zwei Schläuche aus warmplastischem Kunststoff extrudiert, die am stromaufwärtigen Ende 67 der Formstrecke 2 in die Form eintreten und dort mittels Überdruck bzw. Vakuum und gegebenenfalls Stützlutt zu einem Verbund-Rohr 68 verformt werden, das eine glatte Innenwandung und eine äußere Wellung, aufweist, wie es im einzelnen aus der EP 0 563 575 A1 (entsprechend US-Patent 5 320 797) bekannt ist, worauf verwiesen werden darf. Anstelle eines Verbund-Rohres 68 kann auch aus lediglich einem Schlauch aus warmplastischem Kunststoff ein Well-Rohr, wie es aus der. EP 0 065 729 B1 (entspr. US-Patent 4 492 551) bekannt ist oder ein Rippen-Rohr, wie es aus der EP 0 301 189 B1 (entspr. US-Patent 4 900 503) bekannt ist, hergestellt werden.

Die aus den Formabschnitten 3 bestehende Form wandert in Produktionsrichtung 6 vor. Das in ihr erzeugte Rohr 68 wandert mit gleicher Geschwindigkeit mit. Wenn jeweils ein Formabschnitt 3 das stromabwärtige Ende 70 der Formstrecke 2 erreicht hat, müssen die beiden diesen Formabschnitt 3 bildenden Formabschnitts-Hälften 4, 5 quer zur Produktionsrichtung 6 aus der Formstrecke 2 herausgenommen werden. Dies geschieht - wie in Fig. 1 und 2 gestrichelt dargestellt ist - mittels der durch die Transport-Wagen 44, 45 mit Transportarmen 53 gebildeten Querfördereinrichtungen. Die Transport-Brücke 34 wird während der letzten kurzen Wegstrecke des in Produktionsrichtung 6 letzten Formabschnitts 3 geschwindigkeitsgleich mit diesem mitgefahren, wobei die beiden Transport-Wagen 44, 45 in ihre einander benachbarte Position verfahren waren. In dieser Position sind die Haltevorrichtungen 54 mit den Halte-Widerlagern 55 der beiden Formabschnitts-Hälften 4, 5 verriegelt worden. Bei Erreichen des stromabwärtigen Endes 70 werden die beiden Transport-Wagen 44, 45 aufgrund eines entsprechenden Signals der Näherungsschalter 63 auseinandergefahren, wozu der Getriebe-Motor 52 entsprechend angesteuert wird. Aufgrund der Neigung der beiden Brücken-Abschnitte 42, 43 werden die an den Transportarmen 53 gehaltenen Formabschnitts-Hälften 4, 5 von der Grundplatte 1 abgehoben und reibungsfrei nach außen verfahren. Wenn die Transport-Wagen 44 die äußeren Näherungsschalter 66 erreichen, werden sie angehalten. Die Getriebe-Motoren 39, 40 werden angesteuert, so daß die Transport-Brücke 34 entgegen der Produktionsrichtung 6 bis zum stromaufwärtigen Ende 67 der Formstrecke 2 verfahren wird. Auch bei diesem Transport der Formabschnittshälften 4, 5 entgegen der Produktionsrichtung 6 stehen diese nicht in Berührung mit der Grundplatte 1, sondern befinden sich reibungsfrei oberhalb von dieser. Sie werden immer parallel zu sich selbst bewegt.

Bei Erreichen der stromaufwärtigen Näherungsschalter 62 werden die Getriebe-Motoren 39, 40 gestoppt, so daß die Transport-Brücke 34 stillsteht. Es wird dagegen der Getriebe-Motor 52 eingeschaltet und verfährt die Transport-Wagen 44, 45 nach innen zur Formstrecke hin und führt die beiden Formabschnitts-Hälften 4, 5 am stromaufwärtigen Ende 67 quer zur Produktionsrichtung 6 in die Formstrecke 2 ein, wie in Fig. 1 und 2 ausgezogen dargestellt ist. Beim Verfahren der Transport-Wagen 44, 45 zur Formstrecke 2 hin werden aufgrund der Neigung der Brücken-Abschnitte 42, 43 die Formabschnitts-Hälften 4, 5 wieder zur Grundplatte 1 hin abgesenkt, auf der sie zur Auflage kommen, wenn die beiden Formabschnitts-Hälften 4, 5 eines Formabschnitts 3 einander berühren, wie es in Fig. 2 dargestellt ist. Anschließend wird die Transport-Brücke 34 in Produktionsrichtung 6 verfahren, bis die beiden bereits einen Formabschnitt 3 bildenden Formabschnitts-Hälften 4, 5 an den in Produktionsrichtung 6 voreilenden Formabschnitts-Hälften 4, 5 zur Anlage kommen und von den Antriebsritzeln 8 und 16 erfaßt und weitergefördert werden. Dann werden die Spannvorrichtungen 57 gelöst und die Transportarme 53 jeweils wieder von der Formstrecke weg nach außen verfahren. Die Transport-Brücke 34 wird anschließend wieder bis zum stromabwärtigen Ende 70 verfahren, wie zuvor bereits beschrieben worden ist.

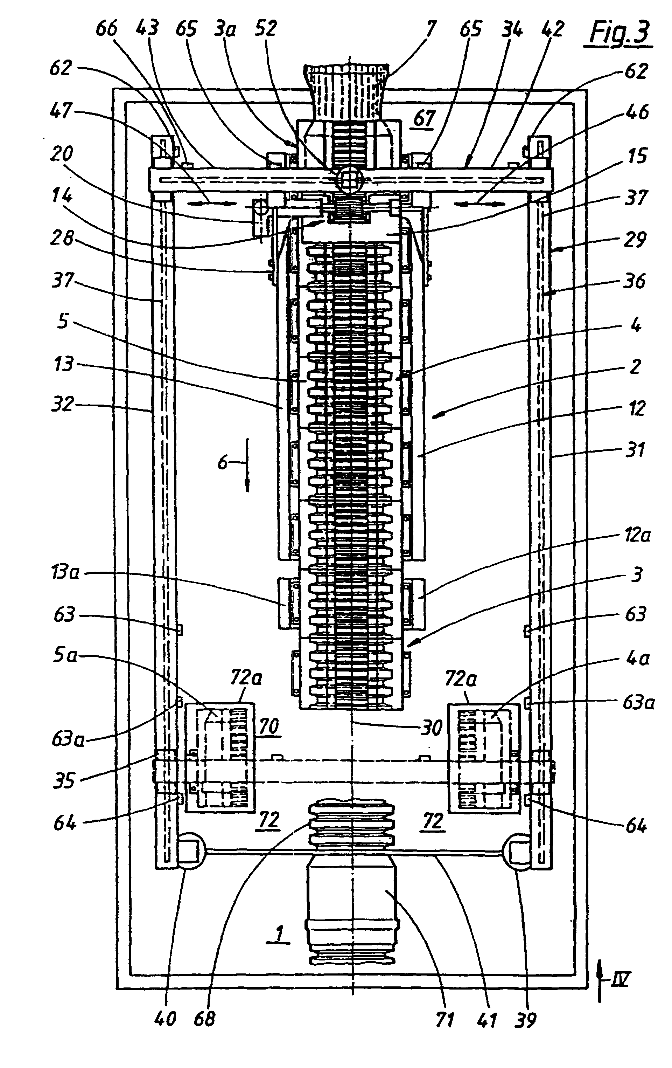

Auf der bisher beschriebenen Vorrichtung zur Herstellung von Rohren 68 können auch zusätzlich Formabschnitts-Hälften 4a, 5a zur Bildung eines zusätzlichen Formabschnitts 3a eingesetzt werden, beispielsweise wenn in vorgegebenen Abständen in dem endlos herzustellenden Rohr 68 Muffen 71 ausgebildet werden sollen, wie es an sich aus der EP 0 563 575 A1 (entsprechend US-Patent 5 320 797) bekannt ist. Die zusätzlichen Formabschnitts- Hälften 4a, 5a befinden sich - bezogen auf die Produktionsrichtung 6 - stromabwärts des stromabwärtigen Endes 70 der Formstrecke 2 in einer Parkposition 72 auf der Grundplatte 1. In diese Parkposition 72 kann die Transport-Brücke 34 verfahren werden. Diese Parkposition 72 wird jeweils durch einen Sockel 72a auf der Grundplatte 1 gebildet, dessen Höhe über der Grundplatte 1 sich aus der Neigung der Brücken-Abschnitte 42, 43 ergibt. Der Sockel 72a ist jeweils so hoch, daß die jeweilige Formabschnitts-Hälfte 4a bzw. 5a in der zugeordneten Stellung der sie tragenden Transportarme 53 auf diesem Sockel 72a aufsitzt. Dieser Parkposition 72 sind die Näherungsschalter 64 an den Führungsschienen 31, 32 zugeordnet. Wenn die zusätzlichen Formabschnitts-Hälften 4a, 5a eingesetzt werden sollen, dann wird die Transport-Brücke 34 bis in die Parkposition 72 verfahren, und es erfolgt ein Verriegeln der zusätzlichen Formabschnitts-Hälften 4a, 5a mit den Transportarmen 53 der Transport-Wagen 44, 45, wie gestrichelt in Fig. 3 dargestellt ist Anschließend erfolgt der Transport entgegen der Produktionsrichtung 6 in der bereits geschilderten Weise, bis die beiden zusätzlichen Formabschnitts-Hälften 4a, 5a am stromaufwärtigen Ende 67 in die Formstrecke 2 eingeführt sind, was in Fig. 3 ausgezogen dargestellt ist. Wenn hierbei die Formstrecke 2 verlängert wird, wie es in Fig. 3 im Vergleich zu Fig. 1 dargestellt ist, dann kann es zweckmäßig sein, zusätzlich Führungsleisten 12a, 13a vorzusehen, die beispielsweise bei Nichteinsatz der Formabschnitts-Hälften 4a, 5a in der Grundplatte 1 versenkt angeordnet sein können. In diesem Fall kommen anstelle der Näherungsschalter 63 in Produktionsrichtung 6 stromabwärts versetzte Näherungsschalter 63a zum Einsatz, die die Funktion der Näherungsschalter 63 haben. Selbstverständlich müssen die zusätzlichen Formabschnitts-Hälften 4a, 5a nicht in den Umlauf der Formabschnitts-Hälften 4, 5 einbezogen sein; sie können nach jedem Durchgang durch die Formstrecke 2 wieder in ihre Parkposition 72 verbracht werden und erst zu einem späteren Zeitpunkt wieder eingesetzt werden. Dies hängt ausschließlich davon ab, wie lang die Formstrecke 2 und wie lang die Rohrabschnitte sein sollen, denen jeweils eine Muffe 71 zugeordnet ist.

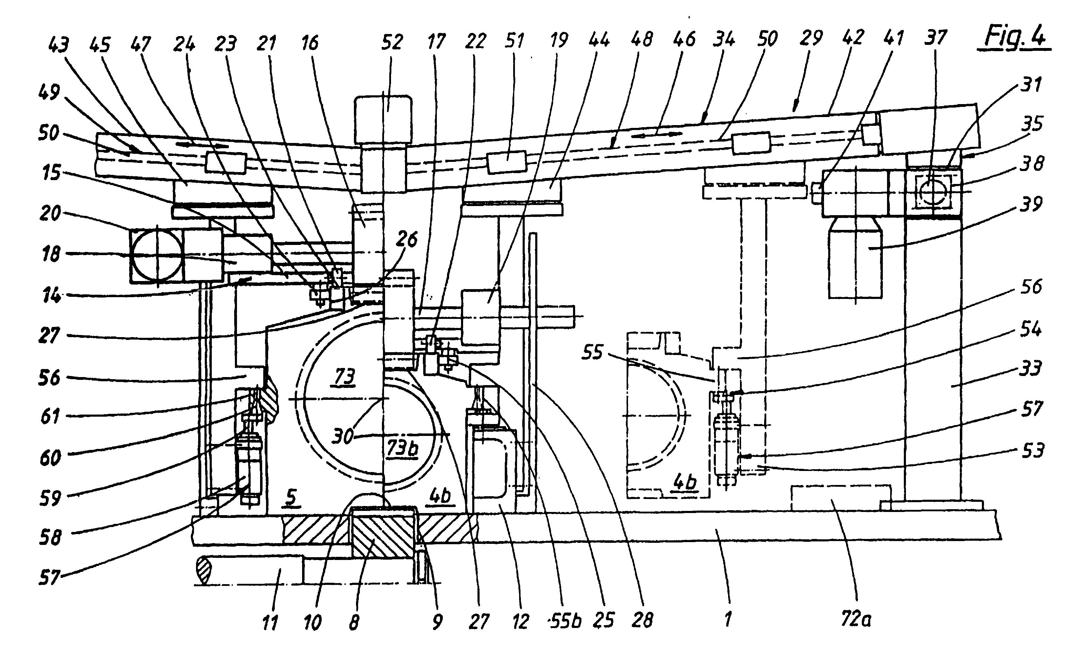

In Fig. 4 ist dargestellt, daß auf der Vorrichtung Rohre 68 unterschiedlichen Durchmessers hergestellt werden können. In Fig. 2 und in Fig. 4 links sind Formabschnitts-Hälften 4, 5 mit Formausnehmungen 73 für Rohre 68 großen Durchmessers dargestellt. In Fig. 4 rechts ist gestrichelt eine Formabschnitts-Hälfte 4b mit einer Formausnehmung 73b für Rohre kleineren Durchmessers dargestellt. Die Halte-Widerlager 55b sind hierbei an den Formabschnitts-Hälften 4b so angeordnet, daß die Formabschnitts-Hälften 4b und naturgemäß auch die zugehörigen, nicht dargestellten Formabschnitts-Hälften auf der Grundplatte 1 aufstehen. Bei einer Umstellung der Vorrichtung auf Rohre anderen Durchmessers müssen demzufolge die inneren Näherungsschalter 65 entsprechend versetzt werden.

## Patentansprüche

1. Vorrichtung zur Herstellung von Rohren aus thermoplastischem Kunststoff mit Querprofilierung, mit im Anschluß an einen Spritzkopf (7) in zwei einander gegenüberliegenden Reihen angeordneten, im Kreislauf geführten Formabschnitts-Hälften (4, 5), die sich paarweise entlang einer geraden Formstrecke (2) zu einer geschlossenen Hohlform ergänzen, wobei jeder der nicht miteinander verbundenen Formabschnitts-Hälften (4, 5) einer Reihe mittels einer Transportvorrichtung (29) am stromabwärtigen Ende (70) der Formstrecke (2) im wesentlichen quer zur Produktionsrichtung (6) aus der Formstrecke (2) herausgeführt und zum stromaufwärtigen Ende (67) der Formstrecke (2) zurückgeführt und dort wieder in die Formstrecke (2) hineingeführt und an die jeweils in Produktionsrichtung (6) vorlaufende Formabschnitts-Hälfte (4, 5) angesetzt wird, wobei die Transportvorrichtung (29) nach Art eines Brückenkranes ausgebildet ist, der eine in Produktionsrichtung (6) verfahrbare, die Formstrecke (2) übergreifende Transport-Brücke (34), zwei auf der Transport-Brücke (34) angeordnete, quer zur Produktionsrichtung (6) und gegensinnig zueinander verfahrbare Transport-Wagen (44, 45) und an jedem Transport-Wagen (44, 45) einen nach unten zur Grundplatte (1) gerichteten Transportarm (53) mit einer Haltevorrichtung tung (54) für je eine Formabschnitts-Hälfte (4, 5) aufweist, **dadurch gekennzeichnet,** daß die paarweise zu einer Hohlform ergänzten FormabschnittsHälften (4, 5) auf der geraden Formstrecke (2) auf einer Grundplatte (1) verschoben, mittels Führungsleisten (12, 13) geführt und zusammengehalten und mittels eines am stromaufwärtigen Ende angeordneten Antriebsritzels (8) angetrieben werden, das in ein an den Formabschnitts-Hälften (4, 5) ausgebildetes Zahnprofil (10) eingreift und daß jede Haltevorrichtung (54) der nur einen Transport-Brücke (34) mit einer Spannvorrichtung (57) zur Verriegelung mit einer Formabschnitts-Hälfte (4, 5) am stromabwärtigen Ende (70) der Formstrecke (2) und zur Freigabe der Formabschnitts-Hälften (4, 5) am stromaufwärtigen Ende (67) der Formstrecke (2) versehen ist.

2. Vorrichtung nach Anspruch 1, **dadurch gekennzeichnet, daß** die Transport-Brücke (34) zwei Brücken-Abschnitte (42, 43) aufweist, die aufeinander zu zur Formstrecke (2) hin geneigt sind.

3. Vorrichtung nach Anspruch 1, **dadurch gekennzeichnet, daß** stromabwärts des stromabwärtigen Endes (70) der Formstrecke (2) und beiderseits von dieser jeweils mindestens eine Parkposition (72) für eine zusätzliche Formabschnitts-Hälfte (4a, 5a) ausgebildet ist, die von der Transport-Brücke (34) überfahrbar sind.

4. Vorrichtung nach Anspruch 3, dadurch gekennzeichnet, daß die Parkpositionen (72) gegenüber der Grundplatte (1) erhöht sind.

5. Vorrichtung nach Anspruch 1, dadurch gekennzeichnet, daß die Transport-Brücke (34) auf parallel zur Formstrecke (2) verlaufenden Führungs-Schienen (31, 32) abgestützt ist.

6. Vorrichtung nach Anspruch 5, dadurch gekennzeichnet, daß die Führungs-Schienen (31, 32) oberhalb der Grundplatte (1) angeordnet sind.

7. Vorrichtung nach Anspruch 1, dadurch gekennzeichnet, daß die Transport-Brücke (34) mittels zwei miteinander gekoppelten, gleichsinnig wirkenden Linearantrieben (36) antreibbar ist.

8. Vorrichtung nach Anspruch 1, dadurch gekennzeichnet, daß die Transport-Wagen (44, 45) mittels zwei miteinander gekoppelten, gegensinnig wirkenden Linearantrieben (48, 49) antreibbar sind.

## Claims

1. An apparatus for the manufacture of pipes of thermoplastic plastics having transverse profile features with mold segment halves (4, 5) guided to circulate and disposed subsequent to an injection head (7) in two lines opposite to each other, the mold segment halves (4, 5) complementing one another by twos along a straight molding path (2) to form a closed hollow mold, each of the mold segment halves (4, 5) of a line that are not interconnected being guided out of the molding path (2) at the downstream end (70) thereof and substantially at right angles to the direction of production (6) by means of a conveying device (29) and being recirculated to the upstream end (67) of the molding path (2), where they are again added to the molding path (2) and put to the respective mold segment half (4, 5) that leads in the direction of production (6), wherein the conveying device (29) is in the form of a gantry crane, which comprises a conveying bridge (34) displaceable in the direction of production (6) and overlapping the molding path (2); two conveying carriages (44, 45) disposed on the conveying bridge (34) and displaceable in opposite directions one relative to the other and at right angles to the direction of production (6); and, on each conveying carriage (44, 45), a conveying arm (53) directed downwards toward the base (1) and having a holding device (54) for a mold segment half (4, 5), characterized in that the mold segment halves (4, 5), which are completed by twos to form a closed hollow mold, are moved on the straight molding path (2) on a base (1), they are guided and kept together thereon by guide rails (12, 13), and driven by a driving pinion (8), which is disposed at the upstream end and engages with a tooth profile (10) formed on the mold segment halves (4, 5); and in that each holding device (54) of the single conveying bridge (34) is provided with a clamping device (57) for locking engagement with a mold segment half (4, 5) at the downstream end (70) of the molding path (2) and for release of the mold segment halves (4, 5) at the upstream end of the molding path (2).

2. An apparatus according to claim 1, characterized in that the conveying bridge (34) has two bridge sections (42, 43), which run towards each other, inclining to the molding path (2).

3. An apparatus according to claim 1, characterized in that downstream of the downstream end (70) and on both sides of the molding path (2), at least one parking position (72) is provided for an additional mold segment half (4a, 5a), over which the conveying bridge (34) can be run.

4. An apparatus according to claim 3, characterized in that the parking positions (72) are raised in relation to the base (1).

5. An apparatus according to claim 1, characterized in that the conveying bridge (34) is supported on guide rails (31, 32) extending parallel to the molding path (2).

6. An apparatus according to claim 5, characterized in that the guide rails (31, 32) are disposed above the base (1).

7. An apparatus according to claim 1, characterized in that the conveying bridge (34) is drivable by means of two linear drives (36), which are coupled with each other and work in the same direction.

8. An apparatus according to claim 1, characterized in that the conveying carriages (44, 45) are drivable by means of two linear drives (48, 49), which are coupled with each other and work in opposite directions.

## Revendications

1. Dispositif pour fabriquer des tubes en matière thermoplastique possédant un profil transversal, comportant des moitiés de section de moule (4,5) qui sont disposées à la suite d'une tête d'injection (7) suivant deux séries disposées en vis-à-vis et sont guidées suivant un circuit et se complètent par couples, le long d'une zone rectiligne de moule (2), pour former un moule creux fermé, et dans lequel chacune des deux moitiés de section de moule (4,5) non reliées entre elles, d'une série est amenée à sortir hors de la section de moule (2), essentiellement transversalement par rapport à la direction de production (6), au moyen d'un dispositif de transport (29), sur l'extrémité aval (70) de la section de moule (2) et est ramenée en direction de l'extrémité amont (67) de la section de moule (2) et, en cet endroit, est à nouveau introduite dans la section de moule (2), et est appliquée contre la moitié respective de section de moule (4,5) qui est en avant dans la direction de production (6), et dans lequel le dispositif de transport (29) est agencé à la manière d'un pont roulant, qui comporte un pont de transport (34), qui est déplaçable dans la direction de production (6) et s'étend au-dessus de la section de moule (2), deux chariots de transport (44,45) disposés sur le pont de transport (34) et déplaçables transversalement par rapport à la direction de production (6) et l'un par rapport à l'autre, et, sur chaque chariot de transport (44,45), un bras de transport (53) dirigé vers le bas en direction de la plaque de base (1) et comportant un dispositif de retenue (54) pour respectivement une moitié de section de moule (4,5), caractérisé en ce
que les moitiés de section de moule (4,5), qui se complètent par couples pour former un moule creux, sont déplacées sur la section rectiligne de moule (2) sur une plaque de base (1), sont guidées et sont maintenues assemblées au moyen de barrettes de guidage (12,13) et sont entraînées à l'aide d'un pignon d'entraînement (8), qui est monté sur l'extrémité amont et engrène avec un profil denté (10) qui est formé sur les moitiés de section de moule (4,5), et que chaque dispositif de retenue (54) est équipé uniquement d'un pont de transport (34) possédant un dispositif de serrage (57) pour réaliser le verrouillage avec une moitié de section de moule (4,5) sur l'extrémité aval (70) de la section de moule (2) et pour libérer les moitiés de section de moule (4,5) sur l'extrémité amont (67) de la section de moule (2).

2. Dispositif selon la revendication 1, caractérisé en ce que le pont de transport (34) comporte deux parties (42,43), qui sont inclinées l'une vers l'autre en direction de la section de moule (2).

3. Dispositif selon la revendication 1, caractérisé en ce qu'au moins respectivement une position de rangement pour une moitié supplémentaire d'une section de moule (4a,5a), au-dessus de laquelle le pont de transport (34) peut passer, est disposée en aval de l'extrémité aval (70) de la section de moule (2) et des deux côtés de cette section.

4. Dispositif selon la revendication 3, caractérisé en ce que les positions de rangement (72) sont surélevées par rapport à la plaque de base (1).

5. Dispositif selon la revendication 1, caractérisé en ce que le pont de transport (34) est supporté par des rails de guidage (31,32) qui sont parallèles à la section de moule (2).

6. Dispositif selon la revendication 5, caractérisé en ce que les rails de guidage (31,32) sont disposés au-dessus de la plaque de base (1).

7. Dispositif selon la revendication 1, caractérisé en ce que le pont de transport (34) peut être entraîné au moyen de deux dispositifs d'entraînement linéaire (36), qui sont couplés entre eux et agissent dans le même sens.

8. Dispositif selon la revendication 1, caractérisé en ce que les chariots de transport (44,45) peuvent être entraînés à l'aide de deux dispositifs d'entraînement linéaire (48,49), qui sont couplés entre eux et agissent en des sens opposés.
